(19) Europäisches Patentamt
European Patent Office
Office européen des brevets

(11) **EP 4 462 302 A1**

(12) **EUROPEAN PATENT APPLICATION**

(43) Date of publication:
**13.11.2024 Bulletin 2024/46**

(21) Application number: **23305759.5**

(22) Date of filing: **12.05.2023**

(51) International Patent Classification (IPC):
***G06F 30/367*** (2020.01)     ***G06F 119/06*** (2020.01)

(52) Cooperative Patent Classification (CPC):
**G06F 30/367;** G06F 2119/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.
1119 NS  Schiphol Rijk Amsterdam (NL)**
Designated Contracting States:
**FR**
• **Mitsubishi Electric Corporation
Chiyoda-ku
Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventor: **Voyer, Nicolas
35708 Rennes Cedex 7 (FR)**

(74) Representative: **Plasseraud IP
104 Rue de Richelieu
CS92104
75080 Paris Cedex 02 (FR)**

(54)    **METHOD AND COMPUTING SYSTEM FOR SIMULATING A POWER CIRCUIT**

(57)    The present disclosure relates to a computer-implemented method (20) for simulating a power circuit (10), wherein the method comprises:
- determining (S20) a modified nodal analysis, MNA, model of the power circuit,
- translating (S21) the MNA model into a Laplace model which describes relations between circuit waveforms and power sources waveforms with a matrix of Laplace functions,
- determining (S22) characteristic frequencies of the power circuit based on the matrix of the Laplace model,
- determining (S23) transfer functions from one circuit waveform to each of the other circuit waveforms, based on the matrix of the Laplace model,
- determining (S24) weighting coefficients for characteristic functions of the characteristic frequencies, based on an initial state of passive energetic components of the power circuit and based on the transfer functions,
- predicting (S25) the circuit waveforms of the power circuit based on the characteristic frequencies, the transfer functions and the weighting coefficients.

Fig. 2

**Description**

TECHNICAL FIELD

The present disclosure relates to the simulation of power circuits and relates more specifically to a method and computing system for simulating a power circuit in the modified nodal analysis, MNA, framework.

The present disclosure finds a particularly advantageous application, although in no way limitative, for the simulation of electronic circuits.

BACKGROUND ART

The simulation of electronic circuits may be used for instance during the design phase of an electronic circuit, in order to identify a design that achieves desired specifications by simulation, which design may then be used to manufacture a real electronic circuit ("real" compared to the simulated electronic circuit which is a virtual one).

Electronic circuit simulation may also be used e.g. for controlling and/or monitoring an existing (real) electronic circuit. In such applications, the simulated electronic circuit corresponds to a "digital twin" of the existing electronic circuit and is used to predict the temporal evolution of the state of the existing electronic circuit. Based on such predictions, it is possible to e.g. adjust the control of the existing electronic circuit (e.g. adjust switching times of switches of the existing electronic circuit) and/or to e.g. detect a dysfunction of the existing electronic circuit by comparing the predictions with measurements of the actual state of the existing electronic circuit. In such applications, the electronic circuit simulation needs to be carried out faster than real time, in order to enable real time control adjustment and/or real time dysfunction detection.

An electronic circuit typically comprises components (resistors, capacitors, inductors, machines, switches, etc.) arranged according to a circuit plan which comprises branches interconnected through nodes, connected to one or more power sources (i.e. voltage or current source). In the following, the states of the branches (i.e. current flowing in the branch) and nodes (i.e. voltage of each node) are referred to as circuit waveforms and are denoted $\vec{x}(t)$. The goal of electronic circuit simulation is to be able to predict $\vec{x}(t)$, i.e. to be able to determine how $\vec{x}(t)$ evolves until a later time $t$ (which may correspond to e.g. an analogue to digital converter, ADC, timing, a switching timing, etc.). For instance, with an electronic circuit composed of $N_b$ branches and $N_n$ nodes, with full connectivity (i.e. the electronic circuit cannot be split as 2 or more independent electronic subcircuits) and with one of the nodes that is grounded, the electronic circuit exhibits $N_w = N_b + N_n - 1$ circuit waveforms, collected in a circuit waveform vector $\vec{x}$ which may be expressed as:

$$\vec{x}(t) = \left(V_1, \ldots, V_{N_n-1}, i_1, \ldots, i_{N_b}\right)^T$$

Such an electronic circuit may be modeled using the MNA framework, in which the electronic circuit is described by the collection of Kirchhoff laws, relating the voltages of each node with the currents flowing in each branch. In the MNA framework, the electronic circuit is represented by a MNA model which describes relations (i.e. Kirchhoff laws) between the circuit waveforms $\vec{x}(t)$, derivatives of said circuit waveforms and power sources waveforms. Branch impedance analysis yields $N_b$ branch voltage relations as function of branch current. Kirchhoff law of currents brings $N_n - 1$ independent additional current balance relations. From the collected set of $N_w$ equations, the dynamics of the electronic circuit is then represented by an equation system (referred herein as MNA model) as follows:

[Math. 1]

$$\boldsymbol{C}\dot{\vec{x}}(t) + \boldsymbol{G}\vec{x}(t) = \vec{u}(t)$$

wherein $\vec{u}(t)$ is the power sources waveform vector representing the input power sources waveforms of each branch.

The main advantage of the MNA framework is that the matrices $\boldsymbol{C}$ and $\boldsymbol{G}$ can be easily automated from the description of any electronic circuit. However, in the prior art, the MNA model can only be numerically solved by using polynomial approximation. The accuracy of the solution can be controlled by e.g. increasing the order of the polynomial approximation, especially for a large t (i.e. for a long-term prediction of the circuit waveforms). However, it remains an approximation and increasing the order of the polynomial approximation also increases the computational complexity for identifying the solution and for simulating the electronic circuit. In the prior art, a simulation over a large simulation duration can be segmented in multiple consecutive steps, reducing the need for large polynomial orders, but still increasing the computational complexity for simulating the electronic circuit.

Electronic circuit simulation may also be carried out using the state-space analysis, SSA, framework, where a matrix relates the vector of energy states to its derivatives and to power sources. The energy state vector contains waveforms driving the storage of energy in the passive energetic components of the electronic circuit (e.g. capacitor voltage, inductor current). For an electronic circuit comprising $N_C$ capacitors and $N_L$ inductors, the energy state of the electronic circuit may be represented by an energy state vector $\vec{X}$:

$$\vec{X}(t) = \left(V_{C_1}, \dots, V_{C_{N_C}}, I_{L_1}, \dots, I_{L_{N_L}}\right)^T$$

In the SSA framework, the energy state vector $\vec{X}$ relates to its derivatives according to the following expression:

[Math. 2]

$$\dot{\vec{X}}(t) = \boldsymbol{A}\vec{X}(t) + \vec{U}(t)$$

wherein $\boldsymbol{A}$ is a full rank $N_p \times N_p$ matrix (with $N_p = N_C + N_L$) and $\vec{U}(t)$ is representative of the input power source vector $\vec{u}(t)$.

An issue with the SSA framework is that the matrix $\boldsymbol{A}$ cannot be automated for any electronic circuit. In practice, the SSA model in [Math. 2] can be manually reached from the MNA model in [Math. 1] for small electronic circuits but is hard to automate for electronic circuits with a large number of branches. In turn, an advantage of the SSA model is that, since the matrix $\boldsymbol{A}$ is full rank, the solution is given without any approximation by the following expression:

[Math. 3]

$$\vec{X}(t) = -\boldsymbol{A}^{-1}\vec{U}(t) + \sum_i \alpha_i e^{\lambda_i t} \vec{V}_i$$

wherein $\{\lambda_i\}_{i \leq N_P}$ are eigenvalues of matrix $A$ which correspond to characteristic frequencies of the electronic circuit, $\{\vec{V}_i\}_{i \leq N_P}$ are corresponding eigenvectors of matrix $\boldsymbol{A}$ and $\{\alpha_i\}_{N_P}$ are weighting coefficients which can be identified from known initial conditions $\vec{X}(0) = -\boldsymbol{A}^{-1}\vec{U}(0) + \Sigma_i \alpha_i \vec{V}_i$. Hence, in the SSA framework (i.e. provided the SSA model can be identified) the energy state vector $\vec{X}(t)$ (and the circuit waveform vector $\vec{x}(t)$) can be computed with a fixed computational complexity and without any approximation for any $t$.

**SUMMARY**

The present disclosure aims at improving the situation. In particular, the present disclosure aims at addressing at least in part some or all of the limitations of the prior art discussed above, by proposing a solution for automatically predicting circuit waveforms for any physical system which can be modelled in the MNA framework, by automatically solving the MNA model (which can be automatically generated) without any approximation.

For this purpose, and according to a first aspect, the present disclosure relates to a computer-implemented method for simulating a power circuit, wherein the power circuit comprises components arranged according to a circuit plan which comprises branches interconnected through nodes, wherein respective states of the branches and nodes correspond to circuit waveforms of the power circuit, wherein the power circuit is supplied with power by one or more power sources, wherein the method comprises:

- determining a modified nodal analysis, MNA, model of the power circuit, wherein the MNA model describes relations between the circuit waveforms, derivatives of said circuit waveforms and power sources waveforms,
- translating the MNA model into another model, referred to as Laplace model, which describes relations between the circuit waveforms and the power sources waveforms by a matrix of Laplace functions,
- determining characteristic frequencies of the power circuit based on the matrix of the Laplace model,
- determining transfer functions from one circuit waveform, referred to as reference circuit waveform, to each of the other circuit waveforms, based on the matrix of the Laplace model,
- determining, for the reference circuit waveform, weighting coefficients for characteristic functions of the characteristic frequencies, based on an initial state of passive energetic components of the power circuit and based on the transfer functions,
- predicting the circuit waveforms of the power circuit based on the characteristic frequencies, the transfer functions and the weighting coefficients.

Hence, the proposed solution relates to a computer-implemented simulation of a power circuit. In the present disclosure, a "power circuit" corresponds to any interconnection of power sources and components (in particular impedances) which include passive energetic components. In practice, such a power circuit may represent a variety of different physical systems. Of course, as discussed above, such a power circuit may represent an electronic circuit (in which case the power sources are electrical power sources).

However, other physical systems may be represented by such power circuits. For instance, thermal networks may be represented by such power circuits (in which case the power sources are heat sources). Indeed, heat sources, thermal impedances, and temperature levels of thermal networks are equivalent to current sources, impedances and voltage levels in electronic circuits. For instance, the simulation of a power circuit representing a thermal network may be used to estimate the junction temperature of power dies comprised in an electronic circuit. In such an example, the power losses due to the conduction and switching of electronic current flowing through each power die behave as heat sources flowing into a network of thermal impedances between power dies and a baseplate. The estimated junction temperature may serve as an input to the control of an electronic circuit. For instance, a switching frequency and/or a current level may be adjusted to comply with some thermal constraints. Compared with measurements, junction temperatures estimated by a digital twin (power circuit) can be used to monitor the degradation of power die interconnections, which is useful for condition-based maintenance.

Other physical systems which may be represented by such power circuits include e.g. reluctance networks, mechanical systems, hydraulic systems, pneumatic systems, etc.

The proposed method solves the MNA equation system (i.e. the MNA model) by using the Laplacian operator to replace the matrices of the MNA model by a single matrix of Laplace functions which directly links the circuit waveforms to the waveforms of the one or more power sources. This matrix of the Laplace model can be processed to determine the characteristic frequencies of the power circuit, without having to identify a SSA model of the power circuit.

By focusing on one of the circuit waveforms, which is considered as a reference circuit waveform, it can be shown that said reference circuit waveform can be formally expressed, without approximation, as a linear combination of characteristic functions (i.e. exponential functions) of the (complex) characteristic frequencies, combined with a term derived from the power sources waveforms. Each of the other circuit waveforms can also be formally expressed, without approximation, as a different linear combination of the same characteristic functions of the same characteristic frequencies, combined with a term derived from the power sources waveforms. The processing of the matrix of the Laplace model also enables identifying, without approximation, transfer functions which enable to determine the weighting coefficients used for the linear combination of any circuit waveform from the weighting coefficients used for the linear combination of the reference circuit waveform.

The weighting coefficients used for the linear combination of the reference circuit waveform can be determined based on known initial conditions of the power circuit (as in the SSA framework), i.e. based on the initial state of the passive energetic components of the power circuit (passive energetic components being components which can store energy, i.e. capacitors and inductors in the case of an electronic circuit) and based on the initial state of the power sources waveforms. The transfer functions can then be used to determine the weighting coefficients for each other circuit waveform of the power circuit.

All circuit waveforms being formally expressed and characterized, they can be predicted for any t in relation to the initial conditions of the power circuit, without any approximation (i.e. the obtained solution is an exact solution of the MNA equation system). Also, while some processing steps may be computationally expensive in some cases (e.g. determining the characteristic frequencies and transfer functions), they can be executed offline without any real time constraints. In turn, the processing steps which depend on the operating conditions of the power circuit (e.g. determining the weighting coefficients for the reference circuit waveform and predicting the circuit waveforms) may have a limited computational complexity since they can use data determined offline.

In specific embodiments, the method according to the first aspect can further comprise one or more of the following optional features, considered either alone or in any technically possible combination.

In specific embodiments, the characteristic frequencies and the transfer functions are determined based on a triangularization of the matrix of the Laplace model.

In specific embodiments, the transfer functions are determined by transforming the matrix of the Laplace model into a transformed matrix that is diagonal except for a single column having no null component, wherein the transfer functions are determined based on said single column of the transformed matrix.

In specific embodiments, the method comprises determining filtered power sources waveforms based on the triangularization of the matrix of the Laplace model and based on the power sources waveforms, and the circuit waveforms are predicted based on said filtered power sources waveforms.

In specific embodiments, the method comprises using the predicted circuit waveforms to perform at least one among the following:

- controlling an existing physical system represented by the simulated power circuit, or control another existing physical system coupled with the existing physical system represented by the simulated power circuit,
- designing a physical system to be manufactured,
- monitoring an existing physical system by comparing circuits waveforms measured on the existing physical system with the predicted circuit waveforms,
- testing an existing control device that is to be used for controlling a physical system represented by the simulated power circuit.

In specific embodiments, the simulated power circuit represents an electronic circuit and/or a thermal network.
In specific embodiments, the method comprises an initialization phase and a simulation phase, wherein the initialization phase is carried out before the simulation phase, and:

- the initialization phase comprises the determination of the MNA model, the translation of the MNA model into the Laplace model, the determination of the characteristic frequencies and the determination of the transfer functions,
- the simulation phase comprises the determination of the weighting coefficients and the prediction of the circuit waveforms of the power circuit.

In specific embodiments, the initialization phase comprises computing an inverse of a matrix which describes a relation between the weighting coefficients of the reference circuit waveform and a state of the passive energetic components of the power circuit, wherein the matrix to be inverted depends on the transfer functions.
In specific embodiments, the initialization phase is carried out independently from an operation of a physical system represented by the simulated power circuit and the simulation phase is carried out in parallel with the operation of the physical system to control or monitor in real time said physical system.
According to a second aspect, the present disclosure relates to a computer-implemented method for simulating a power circuit, wherein the power circuit comprises components which include at least one switch, wherein the at least one switch comprises different states which define different states of the power circuit, wherein in each state the power circuit is split in one or more power subcircuits by the at least one switch and each power subcircuit is simulated by using a method according to any one of the embodiments of the present disclosure.
In specific embodiments, the method according to the second aspect can further comprise one or more of the following optional features, considered either alone or in any technically possible combination.
In specific embodiments, the method comprises:

- identifying a current state of the power circuit and the one or more power subcircuits composing the power circuit in the current state,
- determining an initial state of the passive energetic components of the power circuit at a previous (latest) switching time of the at least one switch, wherein the initial state of the passive energetic components at the previous switching time corresponds to a state of said passive energetic components reached at the previous switching time by the power circuit in a previous state before said previous switching time,
- predicting the circuit waveforms of the power circuit by simulating each of the one or more power subcircuits of the current state of the power circuit, based on the initial state of the passive energetic components at the previous switching time.

In specific embodiments, the method comprises an initialization phase and a simulation phase, wherein the initialization phase is carried out before the simulation phase, and:

- the initialization phase comprises the determination of the MNA model, the translation of the MNA model into the Laplace model, the determination of the characteristic frequencies and the determination of the transfer functions, for each different power subcircuit of the power circuit,
- the simulation phase comprises the determination of the weighting coefficients and the prediction of the circuit waveforms of the power circuit.

According to a third aspect, the present disclosure relates to a computer program product comprising instructions which, when executed by at least one processor, configure said at least one processor to carry out a method according to any one of the embodiments of the present disclosure.
According to a fourth aspect, the present disclosure relates to a computer-readable storage medium comprising instructions which, when executed by at least one processor, configure said at least one processor to carry out a method according to any one of the embodiments of the present disclosure.

According to a fifth aspect, the present disclosure relates to a computing system comprising at least one memory and at least one processor, wherein the at least one processor is configured to carry out a method according to any one of the embodiments of the present disclosure.

## BRIEF DESCRIPTION OF DRAWINGS

The present disclosure will be better understood upon reading the following description, given as an example that is in no way limiting, and made in reference to the figures which show:

- Figure 1: a schematic representation of an exemplary power circuit,
- Figure 2: a diagram representing the main steps of an exemplary embodiment of a method for simulating a power circuit,

- Figure 3: a representation of a first Gaussian pivot applied to a matrix of a Laplace model of the power circuit,
- Figure 4: a representation of a second Gaussian pivot applied to a matrix of the Laplace model of the power circuit,
- Figure 5: a diagram representing an initialization phase and a simulation phase of an exemplary embodiment of the simulating method,
- Figure 6: a schematic representation of decompositions of a power circuit into power subcircuits based on blocking and/or passing states of switches of the power circuit.

In these figures, references identical from one figure to another designate identical or analogous elements. For reasons of clarity, the elements shown are not to scale, unless explicitly stated otherwise.

Also, the order of steps represented in these figures is provided only for illustration purposes and is not meant to limit the present disclosure which may be applied with the same steps executed in a different order.

## DESCRIPTION OF EMBODIMENTS

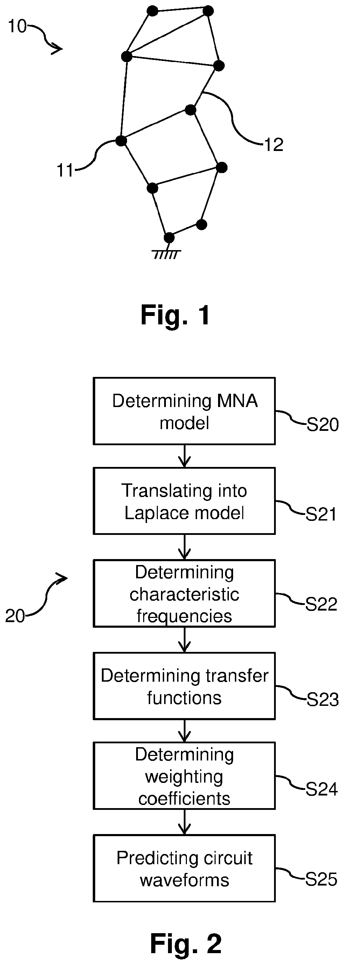

Figure 1 represents schematically an example of power circuit 10. As illustrated by figure 1, the power circuit 10 is composed of branches 12 interconnected through nodes 11. The power circuit 10 comprises components (not represented in the figures) which are supplied with power by one or more power sources (not represented in the figures), and each branch 12 of the power circuit 10 comprises one or more components and/or one or more power sources. The components include impedances, and some of them are passive energetic components, i.e. components which can store energy received from the power source(s). The arrangement of the components and power sources in the power circuit 10 is referred to as circuit plan.

As indicated above, such a power circuit 10 may represent a variety of different physical systems, and the physical system represented by the simulated power circuit 10 may for instance be an electronic circuit, a thermal network, a reluctance network, a mechanical system, a hydraulic system, a pneumatic system, etc.

In the following, we consider in a non-limitative manner that the simulated power circuit represents an electronic circuit. Hence, the power sources of the power circuit 10 correspond to electrical power sources, i.e. one or more voltage sources and/or one or more current sources. The components include impedances (resistors, capacitors, inductors), some of which are passive energetic components (capacitors and inductors). The power circuit 10 may also, in some cases, include other components such as transformers, machines, switches, voltage or current controlled power sources, etc.

For example, the simulated power circuit 10 may represent a DC/DC boost chopper circuit. Other non-limitative examples of electronic circuits that may be represented by the power circuit 10 include DC/DC, DC/AC, AC/AC circuits, such as e.g. voltage source converters, current source inverters, etc., or any combination of two or more of these electronic circuits, such as a DC/DC circuit feeding a DC/AC circuit, etc.

Figure 2 represents schematically the main steps of a method 20 for simulating a power circuit 10.

The simulating method 20 is carried out by a computing system (not represented in the figures). In preferred embodiments, the computing system comprises one or more processors (which may belong to a same computer or to different computers) and one or more memories (which may belong to a same computer or to different computers). The one or more processors may include for instance a central processing unit (CPU), a digital signal processor (DSP), a field-programmable gate array (FPGA), an application specific integrated circuit (ASIC), etc. The one or more memories may include any type of computer readable volatile and non-volatile memories (magnetic hard disk, solid-state disk, optical disk, electronic memory, etc.). The one or more memories may store a computer program product, in the form of a set of program-code instructions to be executed by the one or more processors in order to implement all or part of the steps of the simulating method 20. In other words, the computing system comprises a set of means configured by software (specific computer program product) and/or by hardware (CPU, DSP, FPGA, ASIC, etc.) to implement the steps of the simulating method 20.

As illustrated by figure 2, the simulating method 20 comprises a step S20 of determining a MNA model of the power circuit 10. As discussed above, a MNA model is an equation system which describes relations between circuit waveforms (i.e. the respective states of the branches 12 and nodes 11 of the power circuit 10), derivatives of said circuit waveforms and power sources waveforms (i.e. the respective states of the power sources, for each branch 12 and each node 11).

For instance, with a power circuit 10 composed of $N_b$ branches 12 and $N_n$ nodes 11, with full connectivity (i.e. the power circuit 10 cannot be split as 2 or more independent power circuits) and with one node 11 that is grounded (i.e. connected to the electrical ground), the power circuit 10 exhibits $N_w = N_b + N_n - 1$ circuit waveforms, collected in a circuit waveform vector $\vec{x}$ which may be expressed as:

$$\vec{x}(t) = \left( V_1, \dots, V_{N_n-1}, i_1, \dots, i_{N_b} \right)^T$$

wherein $V_j$ corresponds to the voltage of the jth node 11 and $i_k$ corresponds to the current in the kth branch 12. As discussed above, the MNA model is given by expression [Math. 1], i.e.:

$$\boldsymbol{C}\dot{\vec{x}}(t) + \boldsymbol{G}\vec{x}(t) = \vec{u}(t)$$

wherein $\vec{u}(t)$ is the power sources waveform vector, and $\boldsymbol{C}$ and $\boldsymbol{G}$ are matrices which are obtained based on branch impedance analysis and Kirchhoff laws.

As illustrated by figure 2, the simulating method 20 comprises a step S21 of translating the MNA model into another model, referred to as Laplace model, which describes relations between the circuit waveforms $\vec{x}(t)$ and the power sources waveforms $\vec{u}(t)$ by a single matrix $\boldsymbol{A}(s)$ of Laplace functions:

[Math. 4]

$$\boldsymbol{A}(s)\vec{x}(t) = \vec{u}(t)$$

wherein $\boldsymbol{A}(s) = \boldsymbol{G} + \boldsymbol{C}s$ is a $N_w \times N_w$ matrix and $s$ is the Laplace operator such that $s^k x(t) = \partial^k/\partial t^k(x(t))$.

As illustrated by figure 2, the simulating method 20 comprises a step S22 of determining characteristic frequencies of the power circuit 10 based on the matrix $\boldsymbol{A}(s)$ of the Laplace model. Indeed, the Laplace model provides direct relations between the circuit waveforms $\vec{x}(t)$ and the power sources waveforms $\vec{u}(t)$, and can therefore be processed to determine the characteristic frequencies (e.g. resonance frequencies) of the power circuit 10. However, contrary to the SSA model in expression [Math. 2], which deals with the energy state vector $\vec{X}$, the matrix $\boldsymbol{A}(s)$ of the Laplace model is not a full-rank matrix since it is a $N_w \times N_w$ matrix, while the number of characteristic frequencies is typically equal to $N_p$ (with $N_p$ the number of passive energetic components of the power circuit 10).

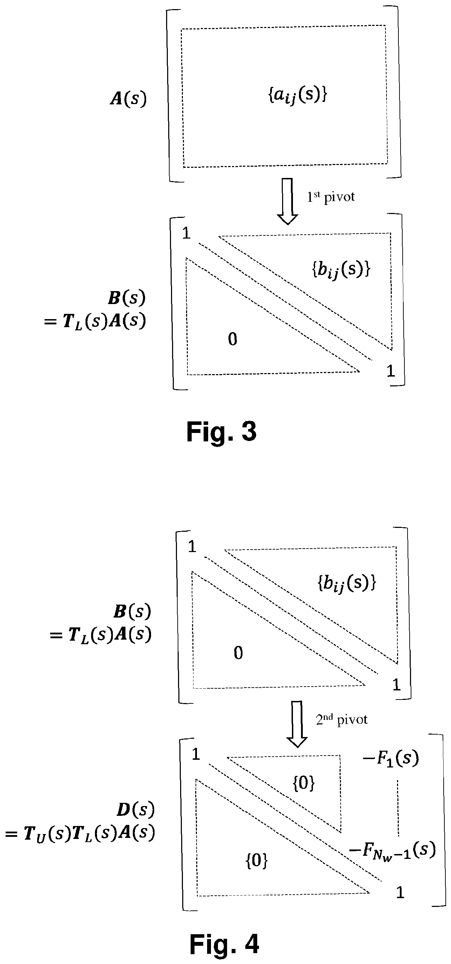

In some embodiments, the characteristic frequencies may be determined based on a triangularization of the matrix $\boldsymbol{A}(s)$ of the Laplace model. For instance, it is possible, during step S22, to apply a first Gaussian pivot transformation to the matrix $\boldsymbol{A}(s)$. As illustrated by figure 3, by applying a first Gaussian pivot transformation, it is possible to rewrite expression [Math. 4] as follows:

[Math. 5]

$$\boldsymbol{B}(s)\vec{x}(t) = \boldsymbol{T}_L(s)\vec{u}(t)$$

wherein:

- $\boldsymbol{T}_L(s)$ is a lower triangular matrix,
- $\boldsymbol{B}(s) = \boldsymbol{T}_L(s)\boldsymbol{A}(s) = \{b_{ij}(s)\}$ is an upper triangular matrix, with $b_{ij}(s) = 0$ ($\forall j$, $\forall i > j$), and with unity diagonal terms i.e. $b_{ii}(s) = 1 \ \forall i$.

On its last dimension, expression [Math. 5] expresses the circuit waveform $x_{N_w}(t)$ as follows:

[Math. 6]

$$x_{N_w}(t) = \sum_k T_{L,N_w,k}(s) u_k(t)$$

By pivotal construction, $T_{L,N_w,k}(s)$ corresponds to a ratio of s polynomials:

$$T_{L,N_w k}(s) = \frac{P_{N_w,k}(s)}{Q(s)}$$

Expression [Math. 6] can thus be reduced to the following ordinary differential equation (ODE) driven by the characteristic polynomial $Q(s)$, the common denominator of matrix $\boldsymbol{T_L}(s)$:

[Math. 7]

$$Q(s)\left(x_{N_w}(t) - y(t)\right) = 0$$

wherein $y(t) = \Sigma_k P_{N_w,k}(s) u_k(t)$.

Hence, during step S22, the characteristic frequencies $\{\lambda_k\}$ of the power circuit 10 may be determined by finding the roots of the characteristic polynomial $Q(s)$, i.e. by finding the complex values $\lambda_k$ such that:

$$Q(\lambda_k) = 0$$

Hence, the characteristic frequencies of the power circuit 10 may be determined based on a triangularization of the matrix $\boldsymbol{A}(s)$ of the Laplace model. However, other methods may be used for determining the characteristic frequencies of the power circuit 10 based on the matrix $\boldsymbol{A}(s)$ of the Laplace model, and the choice of a specific method corresponds to a specific but non-limitative embodiment of the present disclosure.

As illustrated by figure 2, the simulating method 20 comprises a step S23 of determining transfer functions from one circuit waveform, referred to as reference circuit waveform, to each of the other circuit waveforms, based on the matrix $\boldsymbol{A}(s)$ of the Laplace model.

By focusing on one of the circuit waveforms, which is considered as a reference circuit waveform, it can be shown that said reference circuit waveform can be formally expressed, without approximation, as a linear combination of characteristic functions (i.e. exponential functions) of the (complex) characteristic frequencies, combined with a term derived from the power sources waveforms.

Indeed, if we consider for instance that the last circuit waveform $x_{N_w}(t)$ corresponds to the reference circuit waveform, then it can be shown that, as a solution of expression [Math. 7], it necessarily takes the following formal expression of time:

[Math. 8]

$$x_{N_w}(t) = y(t) + \sum_{k \leq N_P} \alpha_k e^{\lambda_k t}$$

wherein $\{\lambda_k\}$ are the (complex-valued) characteristic frequencies of the power circuit 10. The functions $\{e^{\lambda_k t}\}$, which depend on the characteristic frequencies $\{\lambda_k\}$, correspond to the characteristic functions of the power circuit 10, and the reference circuit waveform therefore corresponds to a linear combination of the characteristic functions $\{e^{\lambda_k t}\}$ which are weighted by the weighting coefficients $\{\alpha_k\}$, combined with a term $y(t)$ derived from the power sources waveforms $\vec{u}(t)$.

It should be noted that any of the circuit waveforms can be used as a reference circuit waveform. In particular, simply reordering the circuit waveforms in the circuit waveform vector $\vec{x}(t)$ can lead the last circuit waveform to be a different circuit waveform (i.e. a circuit waveform of a different node 11 or of a different branch 12 of the power circuit 10).

The goal of step S23 is therefore to identify transfer functions which enable to express each of the other circuit waveforms of the power circuit 10 based on the reference circuit waveform.

In some embodiments, the transfer functions may be determined based on the triangularization of the matrix $A(s)$ of the Laplace model, in expression [Math. 5]. For instance, it is possible, during step S23, to further apply a second Gaussian pivot transformation to the matrix $B(s)$. As illustrated by figure 4, by applying a second Gaussian pivot transformation, it is possible to rewrite expression [Math. 5] as follows:

[Math. 9]

$$D(s)\vec{x}(t) = T_U(s)T_L(s)\vec{u}(t)$$

wherein:

- $T_U(s)$ is an upper triangular matrix,
- $D(s) = T_U(s)B(s)$ is still an upper triangular matrix, with $d_{ij}(s) = 0$ ($\forall i < N_w$, $\forall j \neq i$), with unity diagonal terms $d_{ii}(s) = 1$ Vi, and not zero terms on the last column $d_{iN_w}(s) = -F_i(s) \neq 0$ ($\forall i < N_w$).

Hence, unlike traditional lower-upper decomposition, the second Gaussian pivot transformation is applied on the $N_w$ - 1 first dimensions only, to obtain a transformed matrix $D(s)$ that is the identity matrix, except for a single column having no null component which corresponds to the transfer functions $\{F_i(s)\}$ from the reference circuit waveform to the other circuit waveforms.

Indeed, if we denote by $\vec{\delta_i}$ the canonical vector ($\vec{\delta_i}(i) = 1$, $\vec{\delta_i}(j \neq i) = 0$), then expression [Math. 9] leads to:

[Math. 10]

$$x_i(t) = F_i(s)x_{N_w}(t) + \vec{\delta_i}.T_U(s)T_L(s)\vec{u}(t)$$

Based on expression [Math. 8], the circuit waveform $x_i(t)$ may therefore be expressed as:

[Math. 11]

$$x_i(t) = \sum_{k \leq N_P} \alpha_k F_i(\lambda_k)e^{\lambda_k t} + v_i(t)$$

wherein $v_i(t) = H_i(s)\vec{u}(t)$ are filtered versions of the power sources waveforms, with the filters $H_i(s)$ expressed as:

[Math. 12]

$$H_i(s) = (\vec{\delta_i} + F_i(s)\vec{\delta}_{N_w}).T_U(s)T_L(s)$$

Hence, each of the other circuit waveforms can also be formally expressed, without approximation, as a different linear combination of the characteristic functions $\{e^{\lambda_k t}\}$ which are weighted by weighting coefficients which depend on the weighting coefficients $\{\alpha_k\}$ of the reference circuit waveform and on the transfer functions $\{F_i(\lambda_k)\}$, combined with a term $v_i(t)$ derived from the power sources waveforms $\vec{u}(t)$.

As illustrated by figure 2, the simulating method 20 comprises a step S24 of determining the weighting coefficients $\{\alpha_k\}$ of the reference circuit waveform.

The weighting coefficients $\{\alpha_k\}$ are determined based on an initial state of passive energetic components of the power circuit 10 and based on the transfer functions. As discussed above, for a power circuit 10 representing an electronic circuit, the passive energetic components correspond to capacitors and inductors. For a power circuit 10 comprising $N_C$ capacitors and $N_L$ inductors, the energy state of the power circuit 10 may be represented by an energy state vector $\vec{X}$:

$$\vec{X}(t) = \left(V_{C_1}, ..., V_{C_{N_C}}, I_{L_1}, ..., I_{L_{N_L}}\right)^T$$

The energy state vector $\vec{X}$ also relates to the circuit waveform vector $\vec{x}$ through a simple and easy to determine matrix relation:

$$\vec{X}(t) = K\vec{x}(t)$$

wherein $K$ is a $N_P \times N_W$ matrix.

The initial state of the passive energetic components, i.e. $\vec{X}(0)$, and the initial state of the power sources waveforms, i.e. $\vec{u}(0)$, are known at the initial time $t = 0$. For instance, if the power circuit 10 represents an existing electronic circuit to be controlled and/or monitored in real-time, the initial state of the passive energetic components may be obtained by performing measurements on said existing electronic circuit or by simulation using the present disclosure.

Using expression [Math. 11] and introducing a matrix $F = \{F_{ij} = F_i(\lambda_j)\}$, and denoting $\vec{v}(t) = (v_1(t), ..., v_{N_W}(t))^T$ (which depends on $\vec{u}(t)$), then the initial state of the passive energetic components can get rewritten as:

[Math. 13]

$$\vec{X}(0) = K\vec{x}(0) = KF\vec{\alpha} + K\vec{v}(0)$$

wherein $\vec{\alpha}$ corresponds to a vector comprising the weighting coefficients $\{\alpha_k\}$. The weighting coefficients $\{\alpha_k\}$ can therefore be determined as follows:

[Math. 14]

$$\vec{\alpha} = (KF)^{-1}\left(\vec{X}(0) - K\vec{v}(0)\right)$$

As illustrated by figure 2, the simulating method 20 comprises a step S25 of predicting the circuit waveforms $\vec{x}(t)$ of the power circuit 10 based on the characteristic frequencies $\{\lambda_k\}$, the transfer functions $\{F_i(s)\}$ and the weighting coefficients $\{\alpha_k\}$. Based on the above expressions and notations, the exact formulation (without any approximation in that the obtained solution is an exact solution of the MNA equation system) of the circuit waveforms $\vec{x}(t)$ for any t can be expressed as:

[Math. 15]

$$\vec{x}(t) = \vec{v}(t) + F\left(\vec{\alpha} \vee \vec{E}(t)\right)$$

wherein $\vec{E}(t) = (e^{\lambda_1 t}, ..., e^{\lambda_{N_P} t})^T$ is a vector of the characteristic functions of time of the power circuit 10, defined by the characteristic frequencies $\{\lambda_k\}$, and $\vee$ is the term-by-term product operator. It can be seen that the computational complexity of the predicting step S25 is independent of the time $t$ for which the circuit waveforms are to be predicted, i.e. it is the same for a small time $t$ and for a large time $t$.

As can be seen in expression [Math. 15], the circuit waveforms $\vec{x}(t)$ also depend on the power sources waveforms $\vec{u}(t)$, through the filtered power sources waveforms $\vec{v}(t)$. In some cases, the filtered power sources waveforms may for instance be determined based on the triangularization of the matrix $A(s)$ of the Laplace model and based on the power sources waveforms.

As discussed above, each $v_i(t)$ in the filtered power sources waveforms vector $\vec{v}(t)$ can be expressed as $v_t(t) = H_i(s)\vec{u}(t)$. Based on the triangularization of the matrix $A(s)$ of the Laplace model, the filters $H_i(s)$ can be expressed as ratios of polynomial transfer functions:

[Math. 16]

$$H_i(s) = \frac{P_i(s)}{Q(s)} = \frac{\sum_k p_{ik} s^k}{\sum_k q_k s^k}$$

For instance, if the power source waveforms $\vec{u}(t)$ are sinusoidal with time, i.e.:

$$\vec{u}(t) = \mathcal{R}\left(e^{j\omega t + \phi}\right)\vec{U}_0$$

then $v_i(t)$ is also sinusoidal with time:

$$v_i(t) = \mathcal{R}\left(e^{j\omega t + \phi} H_i(j\omega)\vec{U}_0\right)$$

According to another example, if the power source waveforms $\vec{u}(t)$ are linear with time, i.e.:

$$\vec{u}(t) = \vec{U}_0 + \vec{U}_1 t$$

then, if $q_0 \neq 0$, $v_i(t)$ is also linear with time $v_i(t) = V_{i0} + V_{i1}t$. From expression [Math. 16], we get:

$$(q_0 + q_1 s)(V_{i0} + V_{i1}t) = (p_{i0} + p_{i1}s)\left(\vec{U}_0 + \vec{U}_1 t\right)$$

$$q_0 V_{i0} + q_0 V_{i1} t + q_1 V_{i1} = p_{i0}\vec{U}_0 + p_{i0}\vec{U}_1 t + p_{i1}\vec{U}_1$$

Identifying DC and linear terms, we get:

$$\begin{cases} V_{i1} = \dfrac{p_{i0}}{q_0}\vec{U}_1 \\ V_{i0} = \dfrac{p_{i0}}{q_0}\vec{U}_0 + \dfrac{q_0 p_{i1} - q_1 p_{i0}}{q_0{}^2}\vec{U}_1 \end{cases}$$

According to another example, if the power source waveforms $\vec{u}(t)$ are DC power sources with no time dependence, i.e. $\vec{u}(t) = \vec{U}_0$, then we get:

$$v_i(t) = H_i(0)\vec{U}_0$$

Also, while some processing steps may be computationally expensive in some cases (e.g. determining the characteristic frequencies and transfer functions), they depend only on the circuit plan of the power circuit 10 and can be executed offline without any real time constraints. In turn, the processing steps which depend on the operating conditions of the power circuit 10 (e.g. determining the weighting coefficients for the reference circuit waveform and predicting the circuit waveforms) have a limited computational complexity since they can use data determined offline. Hence, the processing steps which depend on the operating conditions of the power circuit 10 can be executed faster than real-time conditions even for complex power circuits.

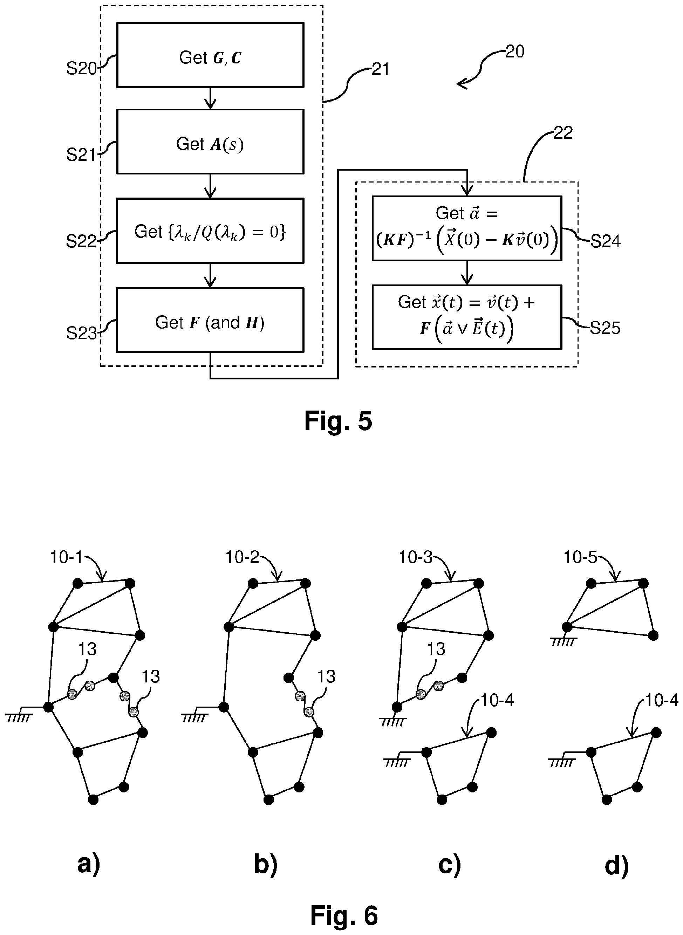

In some embodiments, and as illustrated by figure 5, the simulating method 20 may therefore be decomposed in an initialization phase 21 and a simulation phase 22, wherein the initialization phase 21 is carried out before the simulation phase 22.

Typically, the initialization phase 21 comprises the steps which do not depend on the operating conditions of the power circuit 10, e.g.:

- the step S20 of determining the MNA model (i.e. by determining the matrices $G$ and $C$), and possibly the matrix $K$,
- the step S21 of translating the MNA model into the Laplace model (i.e. by determining the matrix $A(s)$),
- the step S22 of determining the characteristic frequencies and the step S23 of determining the transfer functions (e.g. by determining $D(s)$, $P(s)$ and $Q(s)$, which yield the matrices $F$ of transfer functions and $H$ of filtering functions).

In some cases, the initialization phase 21 may further comprise the computation of the matrix $(KF)^{-1}$, if needed to compute the weighting factors, since it may be computationally expensive to compute and since it needs to be computed only once for all ($KF$ being the matrix describing a relation between the weighting coefficients of the reference circuit waveform and a state of the passive energetic components of the power circuit 10 in expression [Math. 13]).

As discussed above, since the initialization phase 21 does not depend on the operating conditions of the power circuit 10 (i.e. it does not depend on the initial state of the passive energetic components and on the power circuit waveforms), it can be executed independently from the operation of a physical system represented by the power circuit 10, and it needs not to be executed in real-time conditions regardless the considered application of the simulation.

Typically, the simulation phase 22, which corresponds to the dynamic part of the simulation, comprises the steps which depend on the operating conditions of the power circuit 10, e.g.:

- the step S24 of determining the weighting coefficients $\vec{\alpha}$,
- the step S25 of predicting the circuit waveforms of the power circuit 10 for the considered $t$ (e.g. by determining $\vec{v}(t)$, $\vec{E}(t)$ and $\vec{x}(t)$).

As discussed above, the simulation phase 22 may be executed in real-time conditions or faster than real-time conditions, if required for the consider application (e.g. if used to control and/or monitor in real-time an existing physical system represented by the power circuit 10). Indeed, the computational complexity of the predicting step S25 (and of the simulation phase 22) is independent of the time $t$ for which the circuit waveforms must be predicted.

In some cases, the power circuit 10 may also comprise one or more switches (e.g. diodes, transistors, etc.). A switch typically comprises a blocking (a.k.a. opened) state (in which current flow is blocked in a branch 12) and a conducting (a.k.a. closed) state (in which current can flow in a branch 12).

A power circuit 10 comprising one or more switches can be analyzed according to the respective states of the switches. In practice, when a switch gets blocked (i.e. it transitions from the conducting state to the blocking state) the power circuit 10 may be split in two power subcircuits. Hence, as illustrated by figure 6, the topology of the power circuit 10 evolves dynamically according to the respective states of the one or more switches. The respective states of the one or more switches define different states of the power circuit 10. For a given switching state, the power circuit 10 decomposes into one or several independent power subcircuits built of only passive components and power sources, as switches in the blocking state get removed from the power circuit 10, and switches in the passing state are replaced by shortcut current paths (assuming the switches to be ideal switches). Each different power subcircuit can be simulated by using the simulation method 20.

Figure 6 represents schematically an example of power circuit 10 which comprises two switches 13. Part a) of figure 6 represents the state of the power circuit 10 when both switches are in the conducting state, which comprises only one power subcircuit 10-1 (which corresponds to the whole power circuit 10). Part b) of figure 6 represents the state of the power circuit 10 when one of the switches is in the conducting state and the other one is the blocking state, which comprises also only one power subcircuit 10-2, different from the power subcircuit 10-1 in part a). Part c) of figure 6 represents the state of the power circuit 10 when the states of the switches are inverted with respect to part b), which comprises two power subcircuits 10-3 and 10-4, different from the power subcircuits 10-1 and 10-2. Part d) of figure 6 represents the state of the power circuit 10 when both switches are in the blocking state, which comprises the same power subcircuit 10-4 as in part c), and a power subcircuit 10-5 which is different from the power subcircuits 10-1, 10-2, 10-3 and 10-4. Hence, the power circuit 10 can be decomposed in different power subcircuits 10-1 to 10-5, depending on the states of the switches, and each different power subcircuit 10-1 to 10-5 can be simulated as discussed above in relation with figure 2.

In practice, the switching states define different power subcircuits of the power circuit 10, wherein each power subcircuit comprises a subset of the passive energetic components of the power circuit 10. When the power circuit 10 is split in more than one power subcircuit, each power subcircuit determines the evolution $\vec{x_k}(t)$ of a partition of the total number of circuit waveforms $\vec{x}(t)$. The same observation also applies also to the waveforms of energetic passive components $\vec{X_k}(t)$. For instance, the power circuit 10 may comprise four passive energetic components, i.e. $\vec{X}(t) = (X_1, X_2, X_3, X_4)^T$ and, in a given switching state, the power circuit 10 may be split in two power subcircuits, each comprising two passive energetic components, for instance $\vec{X_1}(t) = (X_1, X_3)^T$, $\vec{X_2}(t) = (X_2, X_4)^T$.

Therefore, each $k$th subcircuit is described by respective matrices $C_k$, $G_k$ in the MNA model, which ultimately lead to the determination of matrices $M_k = K_k F_k$. The weighting coefficients of a power subcircuit may be built from an initial state of the passive energetic components at the time of switching. The prediction its circuit waveforms is then given by:

$$\overrightarrow{x_k}(t) = \overrightarrow{v_k}(t) + F_k\left(\overrightarrow{\alpha_k} \vee \overrightarrow{E_k}(t)\right)$$

Ultimately, the circuit waveform vector $\vec{x}(t)$ is reconstructed from the partitions $\overrightarrow{x_k}(t)$ of each power subcircuit.

It is emphasized that the initial state considered for the passive energetic components corresponds to their state at $t$=0 or to their state at a switching time, i.e. when transitioning from one circuit state (as defined by one switching state) to another circuit state (as defined by another switching state). Hence, for a switching event which occurs at a time $t_{sw}$, the energy state vector $\vec{X}(t_{sw})$ is computed according to the state of the power circuit 10 prior to the switching event and is used as initial state of the passive energetic components for the power circuit 10 at the switching event, for the computation of the next simulation step or switching event which simulates only the power subcircuits which are active in the state into which the power circuit 10 has been switched to. Indeed, when the power circuit 10 is switched to another state, the waveforms of the passive energetic components are continuous and start evolving according to the laws of the power subcircuit(s) which are active in the current state of the power circuit 10.

Hence, the prediction of the circuit waveforms $\vec{x}(t)$ may not be computed directly for any time $t$. The prediction of the circuit waveforms $\vec{x}(t)$ needs to simulate the successive states of the power circuit 10 (i.e. simulate the successive active power subcircuits) in order to determine the initial state of the passive energetic components of the power circuit 10 at each switching event.

If the simulation method 20 comprises an initialization phase 21 and a simulation phase 22 as discussed above, then the initialization phase 21 may be executed for all power subcircuits that may become active during the simulation when modifying the states of the switches of the power circuit 10. These possibly computationally expensive tasks are executed only once. The simulation phase 22 is carried out by simulating independently each power subcircuit that is active in the current state of the power circuit 10 (the current state of the power circuit 10 being completely defined by the respective states of the switches of the power circuit 10). As discussed above, the circuit waveforms $\vec{x}(t)$ for an arbitrary time $t$ depend on the successive states into which the power circuit 10 has been switched to, and the simulation needs to be carried out successively for at least each switching time, to determine the initial states of the passive energetic components of the power circuit 10 at each switching event. Hence, if the power circuit 10 is simulated to control and/or monitor in real-time an existing physical system represented by the power circuit 10, then the simulation phase 22 may need to be carried out in coordination with a control device which controls the switches of the existing physical system represented by the simulated power circuit 10. For instance, the simulation phase may receive switching event notifications from the control device which controls the existing physical system, in order to let the simulation phase know which power subcircuits become active and when. Also, the simulation method 20 may feed the control device which controls the physical system with circuit waveforms $\vec{x}(t)$ predicted for specific times, which correspond for example to timings of Analog to Digital Converter, ADC, sampling events at which the control device expects to received measurements. For example, the control device may comprise Pulse Width Modulation, PWM, control of switches and ADC sampling timings may for example be aligned with edges of a PWM carrier.

For instance, the simulation of the power circuit 10 may be used to control an existing physical system represented by the simulated power circuit 10. For instance, if the power circuit 10 represents an existing electronic circuit which comprises switches (e.g. an H-bridge, etc.), then the predicted circuit waveforms may be used to adjust the switching times of said switches of the existing electronic circuit. For example, a control device which controls switches of the existing physical system may want to place a switch in the blocking state when the current flowing through the switch becomes null, achieving zero current switching in order to reduce commutation losses of the switch. The timing at which the current will be null may be predicted using the proposed simulation method 20. Similarly, the timing at which the switch should be placed back in the conducting state may be decided using the proposed simulation method 20, when the voltage across the switch becomes null, achieving zero voltage switching, and reduced commutation losses. According to another non-limitative example, the control device which controls switches of the existing physical system may use simulation predictive control to determine which switch(es) should next be placed into another state, and when, for instance with a motivation to improve a predetermined key performance indicator (e.g. reducing losses, reducing voltage ripple of capacitors, reducing current ripple of inductors, etc.). Since the proposed simulation method 20 can predict accurate results in faster than real time conditions, the key performance indicator can be further improved by using simulation predictive control than when using simple models, as in Model Predictive Control (MPC).

The simulation of the power circuit 10 may also be used to control another existing physical system coupled with the existing physical system represented by the simulated power circuit 10 (e.g. simulating an existing thermal network to estimate the junction temperature of power dies of an existing electronic circuit and using the estimated junction temperature to control the existing electronic circuit in order to e.g. prevent the junction temperature from reaching critical values, etc.).

According to another non-limitative example, the simulation of the power circuit 10 may be used to monitor an existing physical system represented by the simulated power circuit 10. For instance, the predicted circuit waveforms may be compared with measurements of the circuit waveforms carried out on the existing physical system, and a dysfunction of the existing physical system may be detected when e.g. the predicted circuit waveforms differ significantly from the measured ones. For example, if the simulated power circuit 10 is a digital twin of an existing DC/DC boost chopper circuit equipped with a sensor of DC bus capacitor, then a dysfunction of the capacitor may be detected when e.g. the current ripple measured by the sensor exceeds that of the corresponding predicted (simulated) circuit waveform.

According to another non-limitative example, the simulation of the power circuit 10 may be used to design a physical system to be manufactured. In such a case, the simulated power circuit 10 represents a physical system that does not exist yet (contrary to the real-time control and/or monitoring case which deals with an existing, i.e. real, physical system), and the goal of the simulation is to identify a power circuit 10 exhibiting by simulation desired predicted circuit waveforms, by possibly simulating a plurality of power circuits 10 having different designs (having different circuit plans and/or different components). Once a simulated power circuit 10 having desired predicted circuit waveforms is identified, referred to as optimum power circuit 10, then a physical system may be manufactured based on the design of the optimum power circuit 10 found by simulation.

According to another non-limitative example, the simulation of the power circuit 10 may be used to test an existing control device which is to be used for controlling a physical system represented by the simulated power circuit 10. For example, an existing control device that is to be used to control switches of an (existing or not) electronic circuit may be tested by simulating the electronic circuit to generate predicted circuit waveforms that are fed to the existing control device (for instance at ADC sampling events), in order to verify that the control device generates desired control signals in response to the predicted circuit waveforms. This corresponds to a "simulation in the loop" configuration for testing the control device. For example, if the simulated power circuit 10 represents a DC/DC boost chopper circuit, then the simulation of the power circuit 10 may be used to verify that the control signals generated by the control device actually enable stabilizing the (predicted) voltage of a bus capacitor to a desired regulation level. This can also be used, for example, for more complex DC/DC, DC/AC, AC/AC circuits, such as e.g. voltage source converters, current source inverters, etc. As simulation can be performed faster than real time with the present disclosure, the proposed solution therefore enables the real-time verification of control devices, which otherwise would require expensive and bulky "hardware in the loop" test platforms.

It is emphasized that the present disclosure is not limited to the above exemplary embodiments. Variants of the above exemplary embodiments are also within the scope of the present disclosure.

For instance, the present disclosure has been given by considering mainly power circuits representing (existing or not) electronic circuits. However, as discussed hereinabove, the proposed solution may be used to simulate power circuits 10 representing a variety of different physical systems. For instance, the physical system represented by the power circuit 10 may be e.g. an electronic circuit, a thermal network, a hydraulic system, etc., or any combination thereof. Generally speaking, the proposed solution may be used for simulating a power circuit 10 representing any (existing or not) physical system which may be represented in the MNA framework.

**Claims**

1. A computer-implemented method (20) for simulating a power circuit (10), wherein the power circuit comprises components arranged according to a circuit plan which comprises branches (12) interconnected through nodes (11), wherein respective states of the branches and nodes correspond to circuit waveforms of the power circuit, wherein the power circuit is supplied with power by one or more power sources, wherein the method comprises:

   - determining (S20) a modified nodal analysis, MNA, model of the power circuit, wherein the MNA model describes relations between the circuit waveforms, derivatives of said circuit waveforms and power sources waveforms,
   - translating (S21) the MNA model into another model, referred to as Laplace model, which describes relations between the circuit waveforms and the power sources waveforms by a matrix of Laplace functions,
   - determining (S22) characteristic frequencies of the power circuit based on the matrix of the Laplace model,
   - determining (S23) transfer functions from one circuit waveform, referred to as reference circuit waveform, to each of the other circuit waveforms, based on the matrix of the Laplace model,
   - determining (S24), for the reference circuit waveform, weighting coefficients for characteristic functions of the characteristic frequencies, based on an initial state of passive energetic components of the power circuit and based on the transfer functions,
   - predicting (S25) the circuit waveforms of the power circuit based on the characteristic frequencies, the transfer functions and the weighting coefficients.

2. The method (20) according to claim 1, wherein the characteristic frequencies and the transfer functions are determined based on a triangularization of the matrix of the Laplace model.

3. The method (20) according to claim 2, wherein the transfer functions are determined by transforming the matrix of the Laplace model into a transformed matrix that is diagonal except for a single column having no null component, wherein the transfer functions are determined based on said single column of the transformed matrix.

4. The method (20) according to any one of claims 2 to 3, comprising determining filtered power sources waveforms based on the triangularization of the matrix of the Laplace model and based on the power sources waveforms, wherein the circuit waveforms are predicted based on said filtered power sources waveforms.

5. The method (20) according to any one of the preceding claims, comprising using the predicted circuit waveforms to perform at least one among the following:

   - controlling an existing physical system represented by the simulated power circuit, or control another existing physical system coupled with the existing physical system represented by the simulated power circuit,
   - designing a physical system to be manufactured,
   - monitoring an existing physical system by comparing circuits waveforms measured on the existing physical system with the predicted circuit waveforms,
   - testing an existing control device that is to be used for controlling a physical system represented by the simulated power circuit.

6. The method (20) according to any one of the preceding claims, wherein the simulated power circuit represents an electronic circuit and/or a thermal network.

7. The method (20) according to any one of the preceding claims, comprising an initialization phase (21) and a simulation phase (22), wherein the initialization phase is carried out before the simulation phase, and:

   - the initialization phase comprises the determination of the MNA model, the translation of the MNA model into the Laplace model, the determination of the characteristic frequencies and the determination of the transfer functions,
   - the simulation phase comprises the determination of the weighting coefficients and the prediction of the circuit waveforms of the power circuit.

8. The method (20) according to claim 7, wherein the initialization phase comprises computing an inverse of a matrix which describes a relation between the weighting coefficients of the reference circuit waveform and a state of the passive energetic components of the power circuit, wherein the matrix to be inverted depends on the transfer functions.

9. The method (20) according to claim 7 or 8, wherein the initialization phase is carried out independently from an operation of a physical system represented by the simulated power circuit and the simulation phase is carried out in parallel with the operation of the physical system to control or monitor in real time said physical system.

10. A computer-implemented method for simulating a power circuit, wherein the power circuit comprises components which include at least one switch, wherein the at least one switch comprises different states which define different states of the power circuit, wherein in each state the power circuit is split in one or more power subcircuits by the at least one switch and each power subcircuit is simulated by using a method (20) according to any one of the preceding claims.

11. The method according to claim 10, comprising:

   - identifying a current state of the power circuit and the one or more power subcircuits composing the power circuit in the current state,
   - determining an initial state of the passive energetic components of the power circuit at a previous switching time of the at least one switch, wherein the initial state of the passive energetic components at the previous switching time corresponds to a state of said passive energetic components reached at the previous switching time by the power circuit in a previous state before said previous switching time,
- predicting the circuit waveforms of the power circuit by simulating each of the one or more power subcircuits of the current state of the power circuit, based on the initial state of the passive energetic components at the previous switching time.

12. The method according to any one of claims 10 to 11, comprising an initialization phase and a simulation phase, wherein the initialization phase is carried out before the simulation phase, and:

- the initialization phase comprises the determination of the MNA model, the translation of the MNA model into the Laplace model, the determination of the characteristic frequencies and the determination of the transfer functions, for each different power subcircuit of the power circuit,
- the simulation phase comprises the determination of the weighting coefficients and the prediction of the circuit waveforms of the power circuit.

13. A computer program product comprising instructions which, when executed by at least one processor, configure said at least one processor to carry out a method according to any one of the preceding claims.

14. A computer-readable storage medium comprising instructions which, when executed by at least one processor, configure said at least one processor to carry out a method according to any one of claims 1 to 12.

15. A computing system comprising at least one memory and at least one processor, wherein the at least one processor is configured to carry out a method according to any one of claims 1 to 12.

**Fig. 1**

| Determining MNA model | S20 |
| Translating into Laplace model | S21 |
| Determining characteristic frequencies | S22 |
| Determining transfer functions | S23 |
| Determining weighting coefficients | S24 |
| Predicting circuit waveforms | S25 |

**Fig. 2**

$$A(s) \qquad \begin{bmatrix} \{a_{ij}(\text{s})\} \end{bmatrix}$$

$$\Downarrow \quad 1^{\text{st}} \text{ pivot}$$

$$\begin{aligned} B(s) \\ = T_L(s)A(s) \end{aligned} \qquad \begin{bmatrix} 1 & & \{b_{ij}(\text{s})\} \\ & & \\ 0 & & 1 \end{bmatrix}$$

## Fig. 3

$$\begin{aligned} B(s) \\ = T_L(s)A(s) \end{aligned} \qquad \begin{bmatrix} 1 & & \{b_{ij}(\text{s})\} \\ & & \\ 0 & & 1 \end{bmatrix}$$

$$\Downarrow \quad 2^{\text{nd}} \text{ pivot}$$

$$\begin{aligned} D(s) \\ = T_U(s)T_L(s)A(s) \end{aligned} \qquad \begin{bmatrix} 1 & & & -F_1(s) \\ & \{0\} & & \\ & & & -F_{N_w-1}(s) \\ \{0\} & & & 1 \end{bmatrix}$$

## Fig. 4

**Fig. 5**

a)              b)              c)              d)

**Fig. 6**

Europäisches
Patentamt

European
Patent Office

Office européen
des brevets

# EUROPEAN SEARCH REPORT

**Application Number**

EP 23 30 5759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAMACHANDRA ACHAR ET AL: "Efficient Transient Simulation of Embedded Subnetworks Characterized by <maths><tex>$S$</tex></maths>-Parameters in the Presence of Nonlinear Elements", 19981201, vol. 46, no. 12, 1 December 1998 (1998-12-01), XP011037368, * abstract * * page 2357, column 1 - page 2362 * ----- | 1-15 | INV. G06F30/367 ADD. G06F119/06 |
| X | ODABASIOGLU ET AL: "PRIMA: passive reduced-order interconnect macromodeling algorithm", COMPUTER-AIDED DESIGN, 1997. DIGEST OF TECHNICAL PAPERS., 1997 IEEE/AC M INTERNATIONAL CONFERENCE ON SAN JOSE, CA, USA 9-13 NOV. 1997, LOS ALAMITOS, CA, USA,IEEE COMPUT. SOC, US, 9 November 1997 (1997-11-09), pages 58-65, XP032382125, DOI: 10.1109/ICCAD.1997.643366 ISBN: 978-0-8186-8200-1 * abstract * * page 58, column 2, paragraph 1 - page 65 * ----- | 1-15 | |
| X | GALVAN V A ET AL: "MATE multirate modelling of power electronic converters with mixed integration rules", 2016 POWER SYSTEMS COMPUTATION CONFERENCE (PSCC), POWER SYSTEMS COMPUTATION CONFERENCE, 20 June 2016 (2016-06-20), pages 1-7, XP032944124, DOI: 10.1109/PSCC.2016.7540945 [retrieved on 2016-08-10] * abstract * * page 1, column 2 - page 6 * ----- | 1-15 | |

TECHNICAL FIELDS
SEARCHED (IPC)

G06F

The present search report has been drawn up for all claims

| Place of search | Date of completion of the search | Examiner |
|---|---|---|
| Munich | 16 October 2023 | Radev, Boyan |

EPO FORM 1503 03.82 (P04C01)